# EUROPEAN PATENT SPECIFICATION

(11) **EP 1 615 776 B1**
(45) Date of publication and mention of the grant of the patent: **29.08.2012**
(21) Application number: 04727317.2
(22) Date of filing: 14.04.2004
(51) Int. Cl.: B42D 1/00

(54) **IMPROVEMENTS RELATING TO FOLDABLE PUBLICATIONS**
VERBESSERUNGEN BEZÜGLICH FALTBARER VERÖFFENTLICHUNGEN
AMELIORATIONS ASSOCIEES A DES PUBLICATIONS PLIABLES

(30) Priority: 14.04.2003 GB 0308596
(43) Date of publication of application: 18.01.2006
(73) Proprietor: Stauche, Anne, London N6 5AX (GB)
(72) Inventor: Stauche, Anne, London N6 5AX (GB)
(74) Representative: Cummings, Sean Patrick
(86) International application number: PCT/GB2004/001625
(87) International publication number: WO 2004/089641

(56) References cited:
- EP-A- 0 616 310
- DE-A- 4 032 022
- DE-A- 4 306 575
- GB-A- 649 841
- GB-A- 2 322 221
- US-A- 6 158 777

## Description

This invention relates to foldable publications. In particular, it relates to advantageous methods of folding a publication and to folded publications produced thereby. The invention is applicable to publications in general but is particularly applicable to maps, such as city maps or tourist maps, or to technical instructions.

Most of the street maps and tourist maps that are in use today are folded and unfolded according to predetermined fold lines. Although they bear a large amount of information, they can be folded up and thereby reduced in size, to fit in an extremely limited space. Further to these, other publications and information hooklets of different types and styles are known within the publishing industry, which can be folded down to a smaller size and are easy to keep and/or transport.

It is desirable to fold publications in a way that enables them to be stored effectively, whilst maintaining easy access to the information they bear. In particular, it is important for publications to have the capability to be folded to and from pocket size easily and for users to have the option to refer to specific information quickly.

As the amount of information a publication contains increases, it becomes increasingly difficult to balance the two main requirements of storage and access to information. As a result, most known foldable publications are either impractical to view or impractical to store and are hence not user-friendly. Unfolding a publication and folding it back to its original state is often a complicated multi-step process; quick access to specific information required by a user is rarely provided. This is especially true in the case of folded maps.

EP 288472, for example, discloses a foldable sheet ("Z-Guide") that aims to mitigate the problems described above with a combination of concertina folds and two stiff portions. However, the foldable sheet of EP 288472 can only be folded and unfolded in several steps and, in its folded configuration, fails to allow users quick access to specific information thereon.

A second known foldable publications (known as "Popout Maps") is described in WO 99/62724 and also makes use of concertina type folds. In WO 99/62724 a foldable element forming part of a pocket modular structure can be stored in a folded position and viewed in an unfolded position. Whilst the publication of WO 99/62724 can be folded and unfolded relatively easily, it is only suitable for displaying a small amount of information; the folding action in WO 99/62724 only leads to a small reduction in size, which severely limits the size the unfolded publication can have (if the publication is to fit in a pocket).

The utility of both of the above models is limited further by the fact that they can only open in full and in a predetermined way.

DE 40 32 022 A1 describes a third known publication, which can be folded and unfolded section by section and displays two interrelated information layers. In a folded configuration, a first information layer is visible whilst in an unfolded configuration a second information layer is visible. Whilst the folded publication of DE 40 32 022 A1 has independently foldable sections, accessing specific information is relatively complicated since several folding steps have to be performed to do so.

Further examples of known publications are described in DE 43 06 575, EP 0 616 310 and US 6,158,777.

In summary, many of the known folded publications have a disadvantage in that they need to be unfolded completely in order to view the portion carrying the required information. Their size is then usually either too big to be convenient to view easily or too small to carry sufficient detail. None of the known folded publications allow for easy, selective unfolding of a specific section in order to provide an enlarged and more detailed view of that same section.

It is an object of the present invention to provide foldable publications offering at least some of the following advantages: (a) a quick general overview of information at first sight; (b) access to a specific part of this information; (c) the option to view information in a specific part in greater detail; (d) the capability to be folded to a small size; and (e) easy unfolding/folding and consultation when needed.

To this end, from a first aspect, the present invention resides in a foldable sheet incorporating a plurality of foldable sections, each foldable section having front and reverse information bearing faces of which each face is divided into subsections by fold lines arranged together with other fold lines such that each section can be folded in a single action from a fully open position in which all the information on both said faces is exposed to a fully closed position in which the information on two subsections only of one only of said two faces is exposed, wherein the other fold lines of each section are located in two diagonally facing first ones of the subsections leaving the two remaining diagonally facing second ones of the subsections without fold lines, whereby each section can be folded from the fully open position to the fully closed position by picking up a corner of one of the second subsections and placing that corner on the other of the second subsections, and wherein said foldable sections are arranged in a side-by-side array, with cuts between the individual sections of the array, to assist in the single folding action.

By means of the present invention there is provided a flexible folding method producing small size publications, which gives the user the possibility to unfold and view chosen parts of the publication quickly and easily. A specific section (part) may be unfolded to expose a larger view of the same section, thus allowing access to different levels of information without the need to unfold unnecessary sections or to unfold the publication in its entirety. Moreover, at the same time, the other parts are still visible and accessible so that an overall view is always available.

For simplicity of construction and ease of folding, the other fold lines of each section maybe located in two diagonally facing first ones of the subsections leaving the two remaining diagonally facing second ones of the subsections without fold lines, whereby each section can be folded from the fully open position to the fully cleaved position by picking up a corner of one of the second subsections and placing that corner on the corner of the other of the second subsections.

Preferably, in one embodiment of such a construction each section has a centre, the first mentioned fold lines meet orthogonally at the centre and there arc two said other fold lines that respectively extent diagonally from the oppositely facing corners of the first subsections and meet at the centre,

In another preferred embodiment, each section has a centre, the first mentioned fold lines meet orthogonally at the centre and there arc, in each section, eight said other fold lines of which two forwardly folding fold lines meet at the centre, extend diagonally towards, and stop short of, the oppositely facing corners of the first subsections; two rearwardly folding fold lines extend from the two forwardly folding fold lines respectively in alignment therewith to meet the oppositely facing corners of the first subjections respectively; and four forwardly folding fold lines extending in two pairs respectively at 45 degrees from associated ones of the said two forwardly folding fold lines where they meet the two rearwardly folding fold lines respectively.

The foldable sections are preferably of square configuration and symmetrically arranged about a central point in a two-by-two array such that the foldable sheet is of square configuration.

From a second aspect, the present invention resides in a foldable sheet having front and reverse information bearing faces of which each face is divided into subsections by fold lines arranged together with other fold lines such that the sheet can be folded in a single action from a fully open position in which all the information on both said faces is exposed to a fully closed position in which the information on two subsections only of one only of said two faces is exposed, wherein: the other fold lines are located in two diagonally facing first ones of the subsections, leaving the two remaining diagonally facing second ones of the subsections without fold lines, whereby the sheet can be folded from the fully open position to the fully closed position by picking up a corner of one of the second subsections and placing that corner on the corner of the other of the second subsections; the sheet has a centre; the first mentioned fold lines meet orthogonally at the centre; and there arc eight said other fold lines of which two forwardly folding fold lines meet at the centre, extend diagonally towards, and stop short of, the oppositely facing corners of the first subsections; two rearwardly folding fold lines extend from the two forwardly folding fold lines respectively in alignment therewith to meet the oppositely facing corners of the first subsections respectively; and four forwardly folding fold lines extending in two pairs respectively at 45 degrees from associated ones of the said two forwardly folding fold lines where they meet the two rearwardly folding fold lines respectively.

In order that this invention may be more readily understood, embodiments thereof will now be described, with preference to Figures I to 3 of the accompanying drawings, in which:-
Figure 1a shows : foldable publication in the form of a square sheet with fold lines and cuts defining a foldable publication (having four sections) according two one embodiment of the invention;
Figure 1b indicates the way in which the sheet of Figure 1a is folded along the fold lines;
Figure 2 shows a foldable publication in the form of a square sheet with fold lines and cuts defining a foldable publication (having four sections) according to an alternative embodiment of the invention;
Figure 3a shows the foldable publication of either Figures 1a and 1b or Figure 2 completely unfolded and displaying a first information layer;
Figure 3b shows the foldable publication of Figure 3a with all section folded to a reduced size, the sections together displaying a second information layer;
Figure 3c shows the foldable publication of Figure 3a with three sections in the folded position and one section in the unfolded position, displaying a part of the first information layer and a part of the second information layer;
Figure 3d shows the foldable publication of Figure 3a folded to a minimum reduced size; and
Figure 3e shows the foldable publication of Figure 3a in substantially the same configuration as in Figure 3d, but with the top section in the unfolded position to display a part of the first information layer.

In the following description the same reference characters are used to designate the same or similar parts.

Referring to the drawings, there is shown a four-sided, foldable sheet 1a having front and reverse information bearing faces A and B of which each face A, B is divided into four subsections 5, 6, 7, 8 by fold lines 4 arranged together with other fold lines 9 or 10, 11, 12, 13 such that the sheet can be folded in a single action from a fully open position in which all the information on both said faces A and B is exposed to a fully closed position in which the information on two subsections only of one only B of said two faces A and B is exposed.

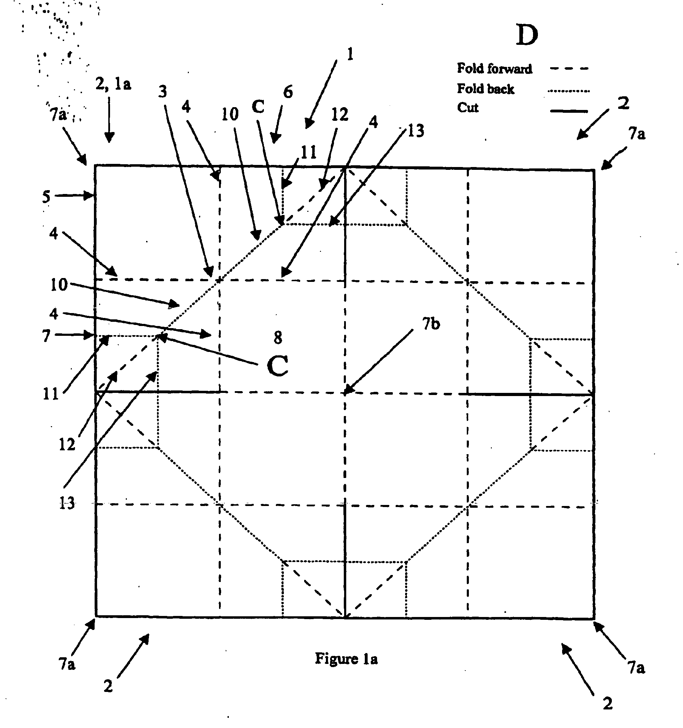

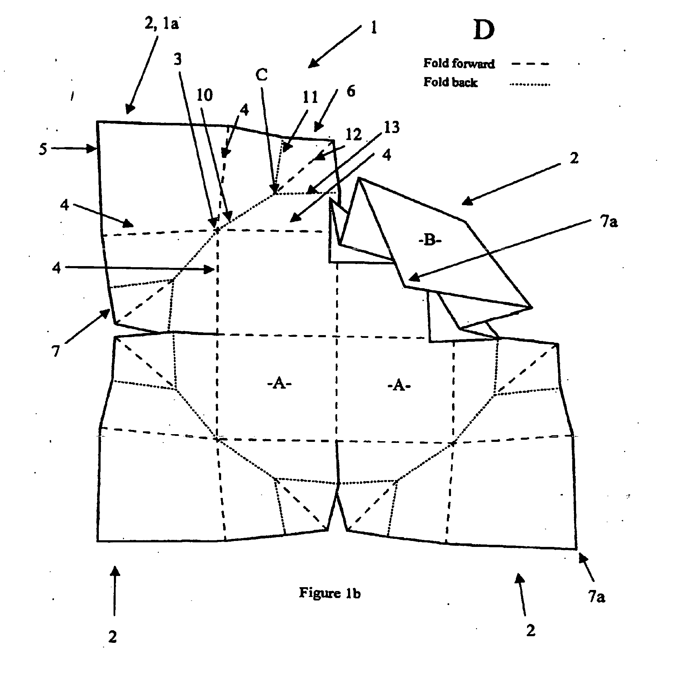

Now two sections will be described in detail. It should be noted that the sections although capable of functioning independently can be building blocks for complex embodiments of the invention (which are illustrated, for example, in Figures 1 to 3). The complex embodiments of the invention will be discussed once the construction and functioning of the sections has been explained.

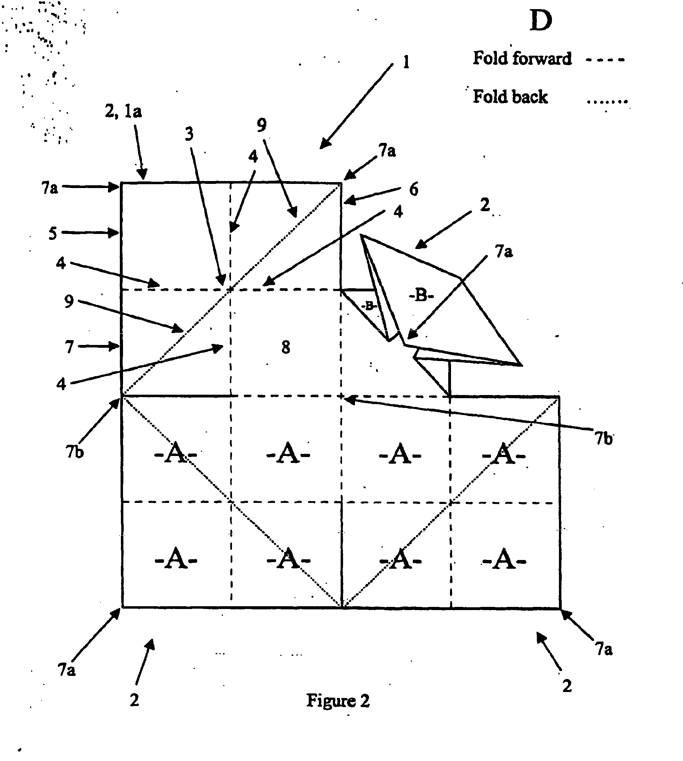

Referring firstly to Figure 2 a square sheet which is generally indicated at I is divisible along central cuts and fold lines into four smaller square sections each marked 2.

Taking one of the square sections 2 as an example, a first section comprises a square sheet 1a having front and reverse faces A and B respectively capable of bearing information (not shown for reasons of clarity), a centre 3 and four fold lines 4, made in the direction of the front face, meeting orthogonally at the centre 3 and dividing the sheet into four square sub-sections 5, 6, 7, 8. The four fold lines of the sheet 4 coact with further fold lines 9 to enable two diagonally opposite subsections of the sheet 6, 7 to be entirely collapsed inwards (in the direction of the front face) in a single folding action that brings the outer corners 7a, 7b of the two remaining, non-collapsible sections 5, 8 together. The term "outer corners" makes reference to those corners of the subsections that are also corners of the sheet itself. The single folding action is, according to the first section, achieved with the help of two further fold lines 9, made in the direction of the rear face B, extending from the centre of the sheet 1a up to the outer corners 7a, 7b of the collapsible subsections 6, 7.

Alternatively, a more complicated system of further fold lines may be used to collapse the collapsible subsections 6, 7 during the single folding action. Referring to Figure 1a, a square sheet 1a has a very similar structure to that of Figure 2. The differences between the sheets relate entirely to the structure of the further fold lines, which is discussed below.

Taking one of the square sections 2 of the sheet of Figure 1a as an example, a second section comprise a sheet 1a which is the same as that of the first section except in respect of the further fold lines. Instead of the two further fold lines 9 of the first section, the second section comprises a system of eight further fold lines 10, 11, 12, 13. The system of eight further fold lines originates at the centre 3 of the sheet and extends in opposite directions into each of the collapsible sub-sections 6. The system of further fold lines is symmetrical about the centre 3 of the sheet and has two main further fold lines 10 running diagonally from the centre 3 of the sheet 1a towards but stopping short of the outer corners 7a, 7b of the collapsible subsections 6, 7 as indicated at C. At C the main further fold line continues to the corner as one of three minor fold lines 12 with there being two further minor fold lines 11 and 13 extending at 45 degrees from the line 12 at C to meet the two sides of the sheet respectively meeting at the outer corners 7a of their respective collapsible subsection 6, 7.

The way in which the subsections 6, 7 collapse during folding may vary. The invention encompasses any folding action that allows the necessary inward folding of the collapsible subsections 6, 7 to overlay the non-collapsible subsections 5, 8 and is not limited to the folds described herein. The applicant has however found that the told lines of the two sections described above allow the subsections to collapse particularly well (in a concertina style of sorts), hence greatly facilitating the single folding action.

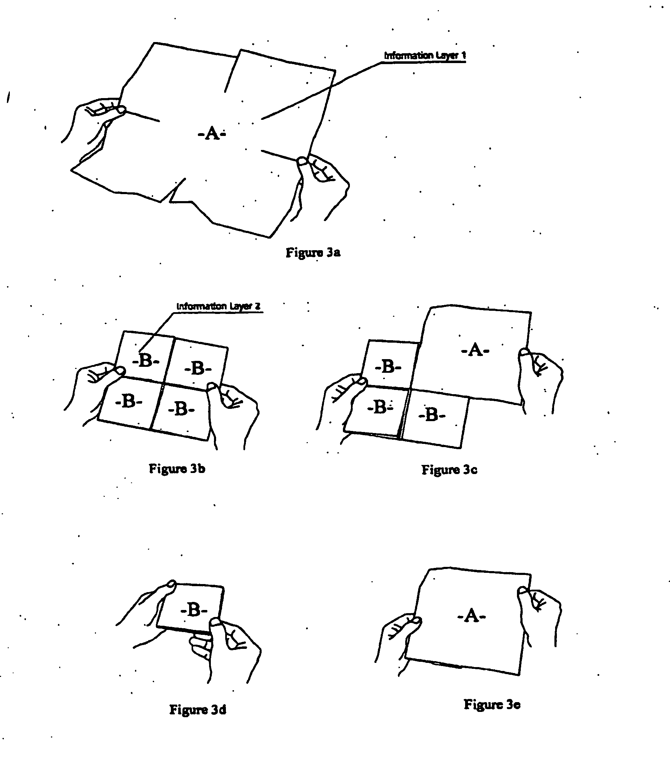

Referring to Figures 2 and 3, the result of the single folding action that entirely collapses two diagonally opposite subsections 6, 7 and brings the outer corners 7a of the remaining subsections together into overlying relalionship is a square, folded configuration (fully closed position), as will be appreciated from Figure 2. In this square folded configuration, the sheet la displays an area corresponding to a quarter of that of the unfolded sheet. The front faces A of all four subsections 5, 6, 7, 8 of the sheet la arc on the inside of the folded configuration and are hence not visible from the outside. The same also applies to the reverse faces R of the two collapsible subsections 6, 7. However, the reverse faces of the remaining two subsections 5, 8 are displayed on the outside of the folded configuration, one at the front and one at the rear.

In order to take advantage of the effects of the single folding movement described above, information is printed onto the front and/or reverse faces A, B of the sheet 1a (in a deliberate way). Thus, for example, when geographic information is to be displayed a map may be printed on the front face A of the sheet, with a smaller overview of the same geographic area being printed on that reverse face subsection which eventually comes into view at the front of the folded configuration, as can be seen in Figure 2. This arrangement is advantageous since it allows a user to view a relatively large scale representation of a geographic area when the sheet is unfolded, whilst providing a less detailed, small scale overview of the same area after the sheet is folded to quarter size in a single folding step.

It should be noted that printing two views of the same geographical area onto the sheet is only one way of utilising the single folding movement described herein and that many other applications are possible. For instance, the front face A of the sheet 1a may display a map whilst the reverse B shows other related information, or vice versa. In most applications it is advantageous for the information displayed in the unfolded configuration to reflate to that displayed in the folded configuration, but this is not essential.

Moving on to complex embodiments of the invention, reference is now once again made to Figures 1a and 1b and Figure 2, which respectively illustrate separate complex embodiments. Figure 2 shows a first complex embodiment comprising an array of four sections 5, 6, 7, 8, wherein each section correesponds to one first section described above. Figures la and 1b show a second complex embodiment comprising an array of four sections 5, 6, 7, 8, wherein each section corresponds to the one second section described above. It will be appreciated from the explanation of the first and second sections that the complex embodiments shown in Figures 1a and 1b and Figure 2 essentially function in the same manner and only differ in terms of the further fold lines 9 or 10, 11, 12 and 13 of their sections 5, 6, 7, 8.

However, the applicant has found that the second complex embodiment is particularly advantageous since it allows the sections to be gripped more easily when they are to be unfolded; this effect results from folding the outer corners of the collapsible subsections away from the outer corners of the non-collapsible subsections in the folded configuration.

In both complex embodiments the individual sections are arranged so that they can complement each other: when all sections are unfolded (fully open position) they combine to form a first, relatively large, square information layer comprised of four quarters formed by the front faces of the individual sections 5, 6, 7, 8. Similarly, when the sections 5, 6, 7, 8 arc all in the folded configuration (fully closed position), they combine to display a second smaller square information layer having one quarter the area of the large square information layer. It will be appreciated from Figures 1a, 1b and 2, as well as the above description of the first and second sections that the second, smaller square information layer is comprised of the reverse face B of one subsection, say 5, of each of the four section 2.

Combining four sections 2 as shown in Figures 1 a and 1b and Figure 2 leads to a 2 X 2 array of sections that has all the advantages of the first and second sections and some further benefits. A 2 X 2 array of sections is particularity suited to displaying maps and is especially beneficial if the same geographic area is displayed on the first and second information layers, musing complementary scales. To achieve this, the sections are printed so that, when they arc all in the unfolded configuration (fully open position), they combine to show a map in a relatively large scale, whose quarters can then be selectively viewed in a smaller scale by folding individual sections; each reverse face subsection of the sections that comes into view at the front upon folding showing a quarter of the small scale map. The sections' ability to fold individually is very useful in this context since it enables both selective magnification of the small scale map and selective miniaturisation of the large scale map, as illustrated in Figures 3a to 3e.

A further advantage of the two complex embodiments of the invention described above, which is illustrated by Figure 3d, is that the sections can be folded on top of each other to facilitate storage of the folded sheet. Thus the size of the 2 X 2 array of folded sections can be reduced to a minimum size by folding it twice in the middle so that only half of the second information layer is visible and accessible on the front and on the back of the folded array (Figure 3d). Since the array can be folded to keep any two of the four sections on the outside, the user can decide which particular sections he wants to be visible for a quick consultation. Of course it is still possible to unfold those sections facing the outside when the array is folded (see Figure 3e). giving quick, convenient access to the information displayed on its front face A.

The simplest way to create the four section embodiments of Figures 1a and 1b and Figure 2 is to make four cuts into a square foldable sheet as shown in Figures 1a, 1b and Figure 2.

Another way to describe the four section embodiments of Figures 1a and 1b and Figure 2 is to look at the 2 X 2 array of sections as a whole, rather than a combination of sections. Thus, the complex embodiments discussed above could also be said to comprise a single square sheet divided by cuts and fold lines into a 4 X 4 array of square sub-sections, comprising four inner sub-sections bounded by twelve outer sub-sections. The outer sub-sections comprise four corner sub-sections, and four pairs of collapsible sub-sections. Each collapsible subsection is separated from its pair by a cut. The collapsible sub-sections have fold lines that permit folding of the sheet in such a way that the front face of each corner section overlies the front face of the inner sub-section of the same smaller square section with the two collapsible subsections of that smaller square section interposed between. Thus, in a folded configuration the rear faces of each of the corner sections combine to present a "third" face of smaller surface area (one quarter) than that of the unfolded sweet.

Another way of describing an array of four sections is to say that Figure 1a, Figure 2 and Figure 3 all show an unfolded square sheet, which is pre-creased and provided with four cuts as indicated. Along these creases the corners of the publication can be folded over to the centre of the sheet to form four small square segments as shown in Figure 3a. On the one hand, this reduces the size of the publication, whereas on the other hand, the four little segments bordering on each other, form a new information layer (referred as Information Layer 2) as seen in Figure 3b, which lies on top of Information Layer 1, which is displayed by the unfolded sheet.

As shown in Figure 3c, the segments of Information Layer 2 can be unfolded separately to give an extended view to the respective part of Information Layer 1 underneath. All other foldable segments are still visible and can be consulted simultaneously if needed. The segments that have been unfolded can be quickly and easily folded back again, following the provided lead folds.

As an example, if information Layer 2 displayed a general view of a map, Information Layer 1 would show a larger street map or tourist information relating to what is shown on Information Tayer 2. Every segment of Information Layer 2 can therefor have a more detailed counterpart in its respective segment of Layer 1.

In summary, the embodiment of the present invention are capable of (a) providing different views and/or details of information: (b) providing selective access to particular parts of a publication; (c) giving access to different levels of detail at the same time; (d) being compact - even pocket size - making it easy to transport; and (e) being easy to unfold, use, and re-fold.

## Claims

1. A foldable sheet (1) incorporating a plurality of foldable sections (2), each foldable section (2) having front and reverse information bearing faces (A, B) of which each face is divided into subsections (5, 6, 7, 8) by fold lines (4) arranged together with other fold lines (9; 10, 11, 12, 13) such that each section (2) can be folded in a single action from a fully open position in which all the information on both said faces (A, B) is exposed to a fully closed position in which the information on two subsections (5, 8) only of one only of said two faces (B) is exposed, wherein the other fold lines (9; 10, 11, 12, 13) of each section (2) are located in two diagonally facing first ones of the subsections (6, 7), leaving the two remaining diagonally facing second ones of the subsections (5, 8) without fold lines, whereby each section (2) can be folded from the fully open position to the fully closed position by picking up a corner (7a) of one of the second subsections (5) and placing that corner (7a) on the corner (7b) of the other of the second subsections (8), and wherein said foldable sections (2) are arranged in a side-by-side array, with cuts between the individual sections (2) of the array to assist in the single folding action.

2. A foldable sheet (1) as claimed in claim 1, wherein each section (2) has a centre (3), wherein the first mentioned fold lines (4) meet orthogonally at the centre (3) and wherein, in each section (2), there are two said other fold lines (9) that respectively extend diagonally from the oppositely facing corners (7a, 7b) of the first subsections (6, 7) and meet at the centre (3).

3. A foldable sheet (1) as claimed in claim 1, wherein each section (2) has a centre (3), wherein the first mentioned fold lines (4) meet orthogonally at the centre (3) and wherein, in each section (2), there are eight said other fold lines (10, 11, 12, 13) of which: two forwardly folding fold lines (10) meet at the centre (3), extend diagonally towards, and stop short of, the oppositely facing corners (7a, 7b) of the first subsections (6, 7); two rearwardly folding fold lines (12) extend from the two forwardly folding fold lines (10) respectively in alignment therewith to meet the oppositely facing corners (7a, 7b) of the first subsections (6, 7) respectively; and four forwardly folding fold lines (11, 13) extending in two pairs respectively at 45 degrees from associated ones of the said two forwardly folding fold lines (10) where they meet the two rearwardly folding fold lines (12) respectively.

4. A foldable sheet (1) as claimed in any preceding claim, wherein the foldable sections (2) are of square configuration and are symmetrically arranged about a central point in a two-by-two array such that the foldable sheet (1) is of square configuration.

5. A foldable sheet (1a) having front and reverse information bearing faces (A, B) of which each face is divided into subsections (5, 6, 7, 8) by fold lines (4) arranged together with other fold lines (10, 11, 12, 13) such that the sheet (1a) can be folded in a single action from a fully open position in which all the information on both said faces (A, B) is exposed to a fully closed position in which the information on two subsections (5, 8) only of one only of said two faces (B) is exposed, wherein:
the other fold lines (9; 10, 11, 12, 13) are located in two diagonally facing first ones of the subsections (6, 7), leaving the two remaining diagonally facing second ones of the subsections (5, 8) without fold lines, whereby the sheet (1a) can be folded from the fully open position to the fully closed position by picking up a corner (7a) of one of the second subsections (5) and placing that corner (7a) on the corner (7b) of the other of the second subsections (8);
the sheet has a centre (3);
the first mentioned fold lines (4) meet orthogonally at the centre (3); and
there are eight said other fold lines (10, 11, 12, 13) of which two forwardly folding fold lines (10) meet at the centre (3), extend diagonally towards, and stop short of, the oppositely facing corners (7a, 7b) of the first subsections (6, 7); two rearwardly folding fold lines (12) extend from the two forwardly folding fold lines (10) respectively in alignment therewith to meet the oppositely facing corners (7a, 7b) of the first subsections (6, 7) respectively; and four forwardly folding fold lines (11, 13) extending in two pairs respectively at 45 degrees from associated ones of the said two forwardly folding fold lines (10) where they meet the two reawardly folding fold lines (12) respectively.

## Patentansprüche

1. Faltbares Blatt (1), das eine Vielzahl faltbarer Abschnitte (2) beinhaltet, wobei jeder faltbare Abschnitt (2) eine vordere und eine rückseitige Informationen tragende Fläche (A, B) hat, wobei jede Fläche durch Faltlinien (4), die zusammen mit anderen Faltlinien (9; 10, 11, 12, 13) angeordnet sind, in Unterabschnitte (5, 6, 7, 8) unterteilt ist, so dass jeder Abschnitt (2) in einer einzelnen Handlung von einer ganz offenen Stellung, in der alle Informationen auf beiden genannten Flächen (A, B) freiliegen, auf eine ganz geschlossene Stellung gefaltet werden kann, in welcher nur die Informationen auf zwei Unterabschnitten (5, 8) von nur einer der genannten zwei Flächen (B) freiliegen, wobei die anderen Faltlinien (9; 10, 11, 12, 13) jedes Abschnitts (2) in zwei einander diagonal gegenüberliegenden ersten der Unterabschnitte (6, 7) liegen, so dass die zwei übrigen einander diagonal gegenüberliegenden zweiten der Unterabschnitte (5, 8) frei von Faltlinien sind, so dass jeder Abschnitt (2) aus der ganz geöffneten Stellung auf die ganz geschlossene Stellung gefaltet werden kann, indem eine Ecke (7a) eines der zweiten Unterabschnitte (5) angehoben und diese Ecke (7a) auf die Ecke (7b) des anderen der zweiten Unterabschnitte (8) gelegt wird, und wobei die genannten faltbaren Abschnitte (2) in nebeneinanderliegender Anordnung mit Einschnitten zwischen den einzelnen Abschnitten (2) der Anordnung, die bei der einzelnen Falthandlung behilflich sind, angeordnet sind.

2. Faltbares Blatt (1) nach Anspruch 1, wobei jeder Abschnitt (2) eine Mitte (3) hat, wobei die zuerst erwähnten Faltlinien (4) in der Mitte (3) orthogonal aufeinandertreffen und wobei es in jedem Abschnitt (2) zwei der genannten anderen Faltlinien (9) gibt, die jeweils diagonal von den einander entgegengesetzten Ecken (7a, 7b) der ersten Unterabschnitte (6, 7) verlaufen und in der Mitte (3) aufeinandertreffen.

3. Faltbares Blatt (1) nach Anspruch 1, wobei jeder Abschnitt (2) eine Mitte (3) hat, wobei die zuerst erwähnten Faltlinien (4) in der Mitte (3) orthogonal aufeinandertreffen und wobei es in jedem Abschnitt (2) acht der genannten anderen Faltlinien (10, 11, 12, 13) gibt, von denen: zwei vorwärts faltende Faltlinien (10) in der Mitte (3) aufeinandertreffen, diagonal in Richtung auf die einander entgegengesetzten Ecken (7a, 7b) der ersten Unterabschnitte (6, 7) verlaufen und kurz vor ihnen enden; zwei rückwärts faltende Faltlinien (12) von den zwei vorwärts faltenden Faltlinien (10) jeweils damit fluchtend verlaufen, um auf die jeweilige der einander entgegengesetzten Ecken (7a, 7b) der ersten Unterabschnitte (6, 7) aufzutreffen; und vier vorwärts faltende Faltlinien (11, 13), die in zwei Paaren jeweils im Winkel von 45 Grad zueinander von zugehörigen der genannten zwei vorwärts faltenden Faltlinien (10), wo sie auf die jeweilige der zwei rückwärts faltenden Faltlinien (12) auftreffen, verlaufen.

4. Faltbares Blatt (1) nach einem der vorhergehenden Ansprüche, wobei die faltbaren Abschnitte (2) eine quadratische Konfiguration haben und in einer Zweiergruppenanordnung symmetrisch um einen zentralen Punkt angeordnet sind, so dass das faltbare Blatt (1) eine quadratische Konfiguration hat.

5. Faltbares Blatt (1a), das eine vordere und eine rückseitige Informationen tragende Fläche (A, B) hat, wobei jede Fläche durch Faltlinien (4), die zusammen mit anderen Faltlinien (10, 11, 12, 13) angeordnet sind, in Unterabschnitte (5, 6, 7, 8) unterteilt ist, so dass das Blatt (1a) in einer einzelnen Handlung von einer ganz offenen Stellung, in der alle Informationen auf beiden genannten Flächen (A, B) freiliegen, auf eine ganz geschlossene Stellung gefaltet werden kann, in welcher nur die Informationen auf zwei Unterabschnitten (5, 8) von nur einer der genannten zwei Flächen (B) freiliegen, wobei:
die anderen Faltlinien (9; 10, 11, 12, 13) in zwei einander diagonal gegenüberliegenden ersten der Unterabschnitte (6, 7) liegen, so dass die zwei übrigen einander diagonal gegenüberliegenden zweiten der Unterabschnitte (5, 8) frei von Faltlinien sind, so dass das Blatt (1a) aus der ganz geöffneten Stellung auf die ganz geschlossene Stellung gefaltet werden kann, indem eine Ecke (7a) eines der zweiten Unterabschnitte (5) angehoben und diese Ecke (7a) auf die Ecke (7b) des anderen der zweiten Unterabschnitte (8) gelegt wird;
das Blatt (1a) eine Mitte (3) hat;
wobei die zuerst erwähnten Faltlinien (4) in der Mitte (3) orthogonal aufeinandertreffen und wobei es acht der genannten anderen Faltlinien (10, 11, 12, 13) gibt, von denen zwei vorwärts faltende Faltlinien (10) in der Mitte (3) aufeinandertreffen, diagonal in Richtung auf die einander entgegengesetzten Ecken (7a, 7b) der ersten Unterabschnitte (6, 7) verlaufen und kurz vor ihnen enden, zwei rückwärts faltende Faltlinien (12) von den zwei vorwärts faltenden Faltlinien (10) jeweils damit fluchtend verlaufen, um auf die jeweilige der einander entgegengesetzten Ecken (7a, 7b) der ersten Unterabschnitte (6, 7) aufzutreffen, und vier vorwärts faltende Faltlinien (11, 13), die in zwei Paaren jeweils im Winkel von 45 Grad zueinander von zugehörigen der genannten zwei vorwärts faltenden Faltlinien (10), wo sie auf die jeweilige der zwei rückwärts faltenden Faltlinien (12) auftreffen, verlaufen.

## Revendications

1. Feuille pliable (1) incorporant une pluralité de sections pliables (2), chaque section pliable (2) présentant des faces porteuses d'informations au recto et au verso (A, B) alors que chaque face est divisée en sous-sections (5, 6, 7, 8) par des lignes de pliage (4) lesquelles sont agencées avec d'autres lignes de pliage (9 ; 10, 11, 12, 13) de sorte que chaque section (2) puisse être pliée en une seule action depuis une position entièrement ouverte, dans laquelle toutes les informations figurant sur les deux desdites faces (A, B) sont exposées, vers une position entièrement fermée, dans laquelle les informations figurant sur deux sous-sections (5, 8) seulement d'une face seulement desdites deux faces (B) sont exposées, cas dans lequel les autres lignes de pliage (9 ; 10, 11, 12, 13) de chaque section (2) sont situées dans deux sous-sections des premières sous-sections se faisant face diagonalement (6, 7), ce qui laisse les deux sous-sections restantes des secondes sous-sections se faisant face diagonalement (5, 8) sans lignes de pliage, par conséquent chaque section (2) peut être pliée depuis la position entièrement ouverte vers la position entièrement fermée en relevant un coin (7a) de l'une des secondes sous-sections (5) et en plaçant ce coin (7a) sur le coin (7b) de l'autre des secondes sous-sections (8), et cas dans lequel lesdites sections pliables (2) sont agencées suivant une disposition côte à côte, avec des découpes entre les sections individuelles (2) de la disposition pour contribuer à faciliter l'action de pliage unique.

2. Feuille pliable (1) selon la revendication 1, chaque section (2) ayant un centre (3), cas dans lequel les lignes de pliage citées en premier (4) se rejoignent orthogonalement au niveau du centre (3) et cas dans lequel, dans chaque section (2), il existe deux desdites autres lignes de pliage (9) qui se prolongent respectivement dans le plan diagonal depuis les coins opposés se faisant face (7a, 7b) des premières sous-sections (6, 7) et se rejoignent au niveau du centre (3).

3. Feuille pliable (1) selon la revendication 1, chaque section (2) ayant un centre (3), cas dans lequel les lignes de pliage citées en premier (4) se rejoignent orthogonalement au niveau du centre (3) et cas dans lequel, dans chaque section (2), il existe huit desdites autres lignes de pliage (10, 11, 12, 13) dont : deux lignes de pliage se pliant vers l'avant (10) se rejoignent au niveau du centre (3), se prolongent diagonalement vers les coins opposés se faisant face (7a, 7b) des premières sous-sections (6, 7) sans pour autant dépasser ces coins ; deux lignes de pliage se pliant vers l'arrière (12) se prolongent depuis les deux lignes de pliage se pliant vers l'avant (10) lesquelles sont respectivement en alignement avec celles-ci afin de rejoindre les coins opposés se faisant face (7a, 7b) des premières sous-sections (6, 7) respectivement ; et quatre lignes de pliage se pliant vers l'avant (11, 13) se prolongeant par deux paires respectivement à 45 degrés depuis les lignes associées desdites deux lignes de pliage se pliant vers l'avant (10) où elles rejoignent respectivement les deux lignes de pliage se pliant vers l'arrière (12).

4. Feuille pliable (1) selon l'une quelconque des revendications précédentes, les sections pliables (2) ayant une configuration en carré et étant agencées symétriquement autour d'un point central suivant une disposition deux par deux de sorte que la feuille pliable (1) ait une configuration en carré.

5. Feuille pliable (1a) présentant des faces porteuses d'informations au recto et au verso (A, B) dont chaque face est divisée en sous-sections (5, 6, 7, 8) par des lignes de pliage (4) lesquelles sont agencées avec d'autres lignes de pliage (10, 11, 12, 13) de sorte que la feulle (1a) puisse être pliée en une seule action depuis une position entièrement ouverte, dans laquelle toutes les informations figurant sur les deux desdites faces (A, B) sont exposées, vers une position entièrement fermée, dans laquelle les informations figurant sur deux sous-sections (5, 8) seulement d'une face seulement desdites deux faces (B) sont exposées, cas dans lequel :
les autres lignes de pliage (9 ; 10, 11, 12, 13) sont situées dans deux sous-sections des premières sous-sections se faisant face diagonalement (6, 7), ce qui laisse les deux sous-sections restantes des secondes sous-sections se faisant face diagonalement (5, 8) sans lignes de pliage, par conséquent la feulle (1a) peut être pliée depuis la position entièrement ouverte vers la position entièrement fermée en relevant un coin (7a) de l'une des secondes sous-sections (5) et en plaçant ce coin (7a) sur le coin (7b) de l'autre des secondes sous-sections (8) ;
la feulle (1a) a un centre (3) ;
les lignes de pliage citées en premier (4) se rejoignent orthogonalement au niveau du centre (3) ; et
il existe huit desdites autres lignes de pliage (10, 11, 12, 13) dont deux lignes de pliage se pliant vers l'avant (10) se rejoignent au niveau du centre (3), se prolongent diagonalement vers les coins opposés se faisant face (7a, 7b) des premières sous-sections (6, 7) sans pour autant dépasser ces coins ; deux lignes de pliage se pliant vers l'arrière (12) se prolongent depuis les deux lignes de pliage se pliant vers l'avant (10) lesquelles sont respectivement en alignement avec celles-ci afin de rejoindre les coins opposés se faisant face (7a, 7b) des premières sous-sections (6, 7) respectivement ; et quatre lignes de pliage se pliant vers l'avant (11, 13) se prolongeant par deux paires respectivement à 45 degrés depuis les lignes associées desdites deux lignes de pliage se pliant vers l'avant (10) où elles rejoignent respectivement les deux lignes de pliage se pliant vers l'arrière (12).
